(19) **Europäisches Patentamt European Patent Office Office européen des brevets**

(11) **EP 4 641 883 A1**

(12) # EUROPEAN PATENT APPLICATION

(43) Date of publication:
**29.10.2025 Bulletin 2025/44**

(21) Application number: **24172779.1**

(22) Date of filing: **26.04.2024**

(51) International Patent Classification (IPC):
**H02J 50/10** (2016.01)

(52) Cooperative Patent Classification (CPC):
**H02J 50/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventor: **MONTIE, Edwin André**
**5656 AG Eindhoven (NL)**

(74) Representative: **Philips Intellectual Property & Standards**
**High Tech Campus 52**
**5656 AG Eindhoven (NL)**

(54) **WIRELESS POWER TRANSMITTER**

(57) A wireless power transmitter (101) wirelessly provides power to a power receiver (105) via an electromagnetic power transfer signal and comprises a power transfer coil (103) arranged to generate the electromagnetic power transfer signal in response to a power circuit (201) providing a drive signal to the power transfer coil (103). The power transmitter includes a pliable member (405, 503) which comprises the power transfer coil (103) and which provides a pliable contact surface (505) for receiving the power receiver (105). The pliable contact surface (405) is arranged to adapt a shape to a contact surface of the power receiver (105). The approach may e.g. provide improved coupling between power transfer coils for an increasing range of different power receivers.

**FIG. 6**

## Description

FIELD OF THE INVENTION

The invention relates to a wireless power transmitter for a wireless power transfer system, and in particular, but not exclusively, to a power transfer for a Ki or Qi type wireless power transfer system.

BACKGROUND OF THE INVENTION

Most present-day electrical products require a dedicated electrical contact in order to be powered from an external power supply. However, this tends to be impractical and requires the user to physically insert connectors or otherwise establish a physical electrical contact. In order to provide a significantly improved user experience, it has been proposed to use a wireless power supply wherein power is inductively transferred from a transmitter coil in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain). Based on the Qi Specification, an approach known as the Ki specification is being developed for high power applications, such as specifically for Kitchen appliances. Ki supports much higher power levels up to (currently) 2.5KW.

It is desired for such wireless power transfer systems to provide compatibility for a large range of diverse devices with very different properties. A power transmitter may for example be desired to be able to power a range of consumer appliances and devices such as mobile phones, shavers, tooth brushed, battery chargers, torches, wireless speakers, etc. However, a challenge is to optimize operation, user friendliness, and/or the power transfer operation for such a diverse range of devices. Indeed, devices may have very different physical designs, form factors, and properties which makes it difficult to achieve optimized operation for all possible devices in all scenarios.

Hence, an improved approach for a wireless power transfer system would be advantageous, in particular, an approach allowing increased flexibility, reduced cost, reduced complexity, improved power transfer, improved efficiency, improved user friendliness, increased compatibility and support for different physical properties of devices involved in the power transfer, improved functionality, facilitated manufacturing, improved support for different power receivers, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided a wireless power transmitter for wirelessly providing power to a power receiver via an electromagnetic power transfer signal, the power transmitter comprising: a power transfer coil arranged to generate the electromagnetic power transfer signal in response to a drive signal being provided to the power transfer coil; a power control circuit for generating the drive signal for the power transfer coil to generate the power transfer signal; a pliable member comprising the power transfer coil and being adapted to provide a pliable contact surface for receiving the power receiver, the pliable contact surface being arranged to adapt a shape (of the pliable contact surface) to a contact surface of the power receiver.

The invention may provide improved performance in many embodiments, and may provide an overall improved power transfer operation in many scenarios. The approach may in particular allow improved adaptation to, and support for, a large variety of different power receivers, including in particular different devices with different physical shapes, bodies, profiles, outlines, and/or configurations. The approach may in many scenarios and situations provide improved coupling between power transfer coils of the power transmitter and power receiver for a range of different power receivers with different physical outlines/shapes. The approach may allow improved power transfer and support of power receiver devices having unusual, non-flat, and/or irregular outlines and profiles.

The pliable member may be a flexible, shape shifting capable, deformable, pliant, elastic, supple, stretchable member. The pliable member may be susceptible of being modified in form and/or shape, and in particular such that the pliable contact surface is modified in form and/or shape.

The pliable member may be arranged to adapt to the power receiver such that the pliable contact surface adapts a shape (of the pliable contact surface) to a contact surface of the power receiver.

The pliable member/contact surface may adapt the shape (of the pliable contact surface) to match and/or complement and/or conform to a contact surface of the power receiver, and in particular such that the pliable contact surface is substantially in contact with the contact surface of the power receiver for at least part (e.g. at least 30%, 50%, 70% or 90%) of the contact surface of the pliable member and/or power receiver.

The pliable member may be responsive to pressure from a contact surface of the power receiver.

The pliable member may be arranged to adapt to pressure from a contact surface of the power receiver. The pliable member may be arranged to adapt the pliable contact surface to provide an extended/increased contact area when in contact with a non-flat contact surface of a power receiver relative to if the power transmitter provided a flat contact surface.

The power transfer coil may be located in and/or on the pliable member. The power transfer coil may be arranged to adapt a shape (of the power transfer coil) to the contact surface of the power receiver and/or the pliable contact surface. The power transfer coil may adapt to follow/contact/conform to the pliable contact surface. The power transfer coil may be a pliable power transfer coil arranged to adapt a shape (of the power transfer coil) to a shape of the pliable contact surface/ the contact surface of the power receiver.

The pliable member may comprise the power transfer coil such that a shape/outline/geometry of the power transfer coil is adapted to a shape of the pliable contact surface/to a contact surface of the power receiver. The pliable member may be susceptible of being modified in form and/or shape such that the power transfer coil is modified in form and/or shape.

In accordance with an optional feature of the invention, the power transfer coil is attached to a surface of the pliable member.

This may allow improved power transfer and/or facilitate implementation and/or operation in many embodiments. It may allow improved and/or facilitated adaptation to a range of different power receiver devices with, in particular, different physical properties.

The pliable member may provide/have a surface being the pliable contact surface. The power transfer coil may be attached to the surface of the pliable member forming the pliable contact surface. In some cases, the pliable member may for example be a membrane or a thin element. In some embodiments, the power transfer coil may be attached to a surface of the pliable member not forming the pliable contact surface, such as the opposite side of the pliable contact surface for a pliable member being a membrane or thin sheet etc.

The power transfer coil may be glued, bonded, adhered, printed etc. to the surface of the pliable member.

In accordance with an optional feature of the invention, the pliable member comprises a piece of fabric forming the pliable contact surface.

This may allow improved and/or facilitated implementation in many embodiments. It may allow improved and/or facilitated adaptation to a range of different power receiver devices with, in particular, different physical properties.

The fabric may be a piece of cloth.

In accordance with an optional feature of the invention, the power transfer coil is sown into the piece of fabric.

This may allow improved and/or facilitated implementation in many embodiments.

In accordance with an optional feature of the invention, the pliable member forms at least part of a wall of an enclosed chamber, the enclosed chamber comprising a material.

This may allow improved power transfer and/or facilitate implementation and/or operation in many embodiments. It may allow improved and/or facilitated adaptation to a range of different power receiver devices with in particular different physical properties. It may in many cases allow for facilitated manufacturing and/or an improved approach for providing a desired pliability of the pliable contact surface.

In some embodiments, the pliable member comprises a membrane providing the pliable contact surface and (at least partly) forming a cavity/enclosed chamber comprising the material.

In some embodiments, the power transmitter comprises a material enclosed in a cavity/enclosed chamber (at least partly) formed by the pliable member.

The enclosed member/ cavity may be formed by the opposite surface of a membrane/the pliable member than the one forming the pliable contact surface. The membrane may be a pliable/flexible membrane.

In some embodiments, the pliable member is formed by a flexible membrane enclosing/ constraining the material.

In some embodiments, the pliable member may be a hollow member comprising the material and having at least a pliable section forming the pliable contact surface.

In accordance with an optional feature of the invention, the material is a non-solid material.

This may be particularly advantageous in many embodiments.

In accordance with an optional feature of the invention, the material is a compressible material.

This may be particularly advantageous in many embodiments. The compressible material may in many embodiments have a bulk modulus not exceeding 0.1, 0.5, 1, 5, 10 GPa.

In accordance with an optional feature of the invention, the material is/comprises a gel.

This may allow particularly advantageous implementation and/or operation in many scenarios.

In accordance with an optional feature of the invention, the material is/comprises a foam.

This may allow particularly advantageous implementation and/or operation in many scenarios. The foam may specifically be/comprise a memory foam.

In accordance with an optional feature of the invention, the material is/comprises a liquid.

This may allow particularly advantageous implementation and/or operation in many scenarios. The liquid may specifically be water.

In accordance with an optional feature of the invention, the material is/comprises a gas.

This may allow particularly advantageous implementation and/or operation in many scenarios.

In accordance with an optional feature of the invention, the wireless power transfer apparatus is arranged to vary/adapt a pressure of the material in the enclosed chamber.

This may allow improved power transfer and/or facilitate implementation and/or operation in many embodiments. It may allow improved and/or facilitated adaptation to a range of different power receiver devices with, in particular, different physical properties. The feature may for example in many scenarios allow improved coupling between power transfer coils. The pressure may affect/be exerted on the pliable member/pliable contact surface.

In accordance with an optional feature of the invention, the wireless power transfer apparatus is arranged to vary/adapt a density of the material in the enclosed chamber.

This may allow improved power transfer and/or facilitate implementation and/or operation in many embodiments. It may allow improved and/or facilitated adaptation to a range of different power receiver devices with in particular different physical properties. The feature may for example in many scenarios allow improved coupling between power transfer coils.

In accordance with an optional feature of the invention, the wireless power transfer apparatus is arranged to adapt the pressure (and/or the density) of the material in the enclosed chamber dependent on a coupling factor between the power transfer coil and a power receiving coil of the power receiver.

This may allow improved power transfer and/or facilitate implementation and/or operation in many embodiments. It may allow improved and/or facilitated adaptation to a range of different power receiver devices with, in particular, different physical properties. The feature may for example in many scenarios allow improved coupling between power transfer coils.

In accordance with an optional feature of the invention, the wireless power transfer apparatus is arranged to vary an amount of the material in the chamber.

This may allow improved power transfer and/or facilitate implementation and/or operation in many embodiments. It may allow improved and/or facilitated adaptation to a range of different power receiver devices with, in particular, different physical properties. The feature may for example in many scenarios allow improved coupling between power transfer coils. The feature may allow an efficient and facilitated adaptation.

In accordance with an optional feature of the invention, the wireless power transfer apparatus varies a degree of compression of the material in the chamber.

This may allow improved power transfer and/or facilitate implementation and/or operation in many embodiments. The feature may allow an efficient and facilitated adaptation.

In accordance with an optional feature of the invention, the controller is arranged to vary a size of the chamber.

This may allow improved power transfer and/or facilitate implementation and/or operation in many embodiments. It may allow improved and/or facilitated adaptation to a range of different power receiver devices with in particular different physical properties. The feature may for example in many scenarios allow improved coupling between power transfer coils. The feature may allow an efficient and facilitated adaptation.

According to an aspect of the invention there is provided a method of operation for a wireless power transmitter wirelessly providing power to a power receiver via an electromagnetic power transfer signal, the power transmitter comprising: a power transfer coil generating the electromagnetic power transfer signal in response to a drive signal being provided to the power transfer coil; a pliable member comprising the power transfer coil and being adapted to provide a pliable contact surface for receiving the power receiver, the pliable contact surface adapting a shape (of the pliable contact surface) to match a contact surface of the power receiver, the pliable member comprising a membrane providing the pliable contact surface and forming at least part of a wall of a chamber comprising a material; and the method comprising: generating the drive signal for the power transfer coil to generate the power transfer signal; and varying/adapting a pressure of the material on the pliable member.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of elements of a power transfer system in accordance with some embodiments of the invention;

FIG. 2 illustrates an example of elements of a power transmitter in accordance with some embodiments of the invention;

FIG. 3 illustrates an example of elements of a power receiver in accordance with some embodiments of the invention;

FIG. 4 illustrates an example of a power receiver device, and a power transmitter device in accordance with some embodiments of the invention;

FIG. 5 illustrates an example of a cross section of an exemplary power transmitter device in accordance with some embodiments of the invention;

FIG. 6 illustrates an example of a cross section of an exemplary power transmitter device in accordance with some embodiments of the invention;

FIG. 7 illustrates an example of a cross section of an exemplary power transmitter device in accordance with some embodiments of the invention;

FIG. 8 illustrates an example of a cross section of an exemplary power transmitter device in accordance with some embodiments of the invention;

FIG. 9 illustrates an example of a cross section of an exemplary power transmitter device in accordance with some embodiments of the invention; and

FIG. 10 illustrates an example of a cross section of an exemplary power transmitter device in accordance with some embodiments of the invention.

## DETAILED DESCRIPTION OF THE EMBODIMENTS

The following description focuses on embodiments of the invention applicable to a wireless power transfer system utilizing a power transfer approach such as known from the Qi or Ki specifications. However, it will be appreciated that the invention is not limited to this application but may be applied to many other wireless power transfer systems.

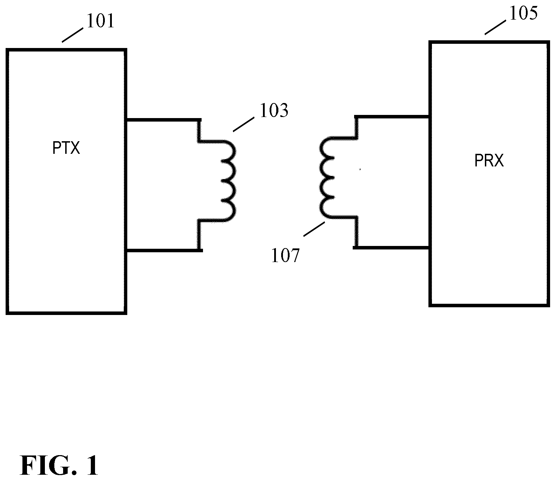

FIG. 1 illustrates an example of some functional elements of a power transfer system in accordance with some embodiments of the invention. The power transfer system comprises a power transmitter 101 which includes (or is coupled to) a transmitter power transfer coil/inductor 103. The system further comprises a power receiver 105 which includes (or is coupled to) a receiver power transfer coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the power transfer coil 103 of the power transmitter. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receiver power transfer coil 107, no power will be extracted by the power receiver from the generated electromagnetic field (apart from losses). In such a scenario, the driving of the transmitter power transfer coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter power transfer coil 103 and the receiver power transfer coil 107 are loosely coupled and thus the receiver power transfer coil 107 picks up (at least part of) the power transfer signal from the power transmitter 101. Thus, the power is transferred from the power transmitter 101 to the power receiver 105 via a wireless inductive coupling from the transmitter power transfer coil 103 to the receiver power transfer coil 107. The term power transfer signal is mainly used to refer to the inductive signal/ magnetic field between the transmitter power transfer coil 103 and the receiver power transfer coil 107 (the magnetic flux signal), but it will be appreciated that by equivalence it may also be considered and used as a reference to an electrical signal provided to the transmitter power transfer coil 103 or picked up by the receiver power transfer coil 107.

In the example, the power receiver 105 is specifically a power receiver that receives power via the receiver power transfer coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Qi or Ki Standards/Specifications.

Many wireless power transfer systems, and in particular high power systems such as Ki, utilize resonant power transfer where the transmitter power transfer coil 103 is part of a resonance circuit and typically the receiver power transfer coil 107 is also part of a resonance circuit. In many embodiments, the resonance circuits may be series resonance circuits and thus the transmitter power transfer coil 103 and the receiver power transfer coil 107 may be coupled in series with a corresponding resonance capacitor. The use of resonance circuits tends to provide a more efficient power transfer.

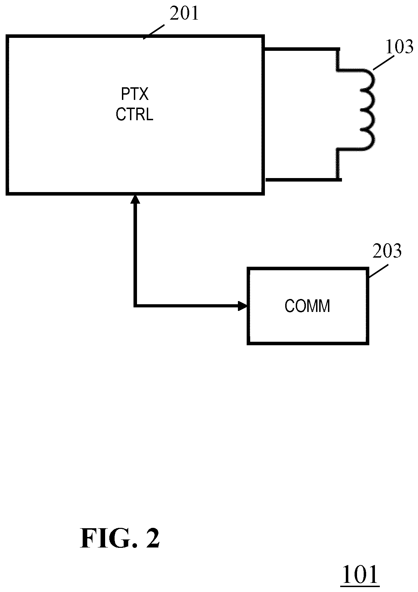

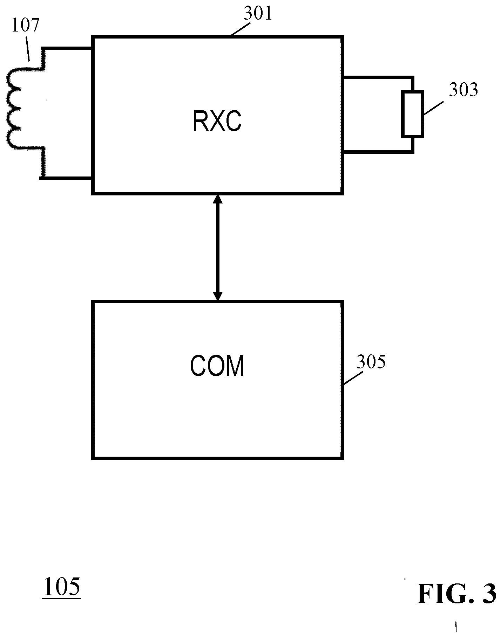

FIG. 2 illustrates elements of the power transmitter 101 and FIG. 3 illustrates elements of the power receiver 105 of FIG. 1 in more detail.

The power transmitter 101 of FIG. 2 includes a power circuit/power transmitter controller 201 which can generate a drive signal that is fed to the transmitter power transfer coil 103 which in return generates the electromagnetic power transfer signal, which provides a power transfer to the power receiver 105. The power transfer signal is provided (at least) during power transfer time intervals of the power transfer phase.

The power circuit/power transmitter controller 201 may typically comprise an output circuit in the form of an inverter, typically formed by driving a full or half bridge as will be well known to the skilled person.

The power circuit 201 is arranged to control the operation of the power transmitter 101 in accordance with the desired operating principles. Specifically, the power transmitter 101 may include many of the functionalities required to perform power control in accordance with the Ki Specifications.

The power circuit 201 is in particular arranged to control the generation of the drive signal, and it can specifically control the power level of the drive signal, and accordingly the level of the generated power transfer signal. The power circuit 201 comprises a power loop controller controlling an operating point power level (such as the average power over a given time interval) of the power transfer signal in response to the power control messages received from the power receiver 105 during the power control phase. The power level operating point may thus be adapted in response to the power control messages received from the power receiver 105 and the power control loop may be arranged to set/determine/-control the power level operating point.

In order to receive data and messages from the power receiver 105, the power transmitter 101 comprises a first communicator 203 which is arranged to receive data and messages from the power receiver 105 as well as transmit data and messages to the power receiver 105 (as will be appreciated by the skilled person, a data message may provide one or more bits of information).

The communication may performed by modulation of the power transfer signal (as is typically the case for Qi type systems) or of a separated communication carrier generated by separate communication coil (as is typically the case for Ki type systems). The modulation may typically be frequency or amplitude modulation in the direction from the power transmitter to the power receiver and load modulation in the direction from the power receiver to the power transmitter. In some cases, the communication may be in accordance with the Near Field Communication, NFC, Specifications and the power transmitter and power receiver may specifically include NFC functionality.

FIG. 3 illustrates some exemplary elements of the power receiver 105.

The receiver power transfer coil 107 is coupled to a power receiver controller/circuit 301 which couples the receiver power transfer coil 107 to a load 303 The power receiver controller/circuit 301 includes a power control path which converts the power extracted by the receiver power transfer coil 107 into a suitable supply for the load 303. In addition, the power receiver controller/circuit 301 may include various power receiver controller functionality required to perform power transfer, and in particular functions required to perform power transfer in accordance with the Qi or Ki specifications.

In order to support communication from the power receiver 105 to the power transmitter 101 the power receiver 105 comprises a second communicator 307 which is arranged to perform the complementary operation of the first communicator 205, and specifically it may communicate therewith by load modulating the power transfer signal (or a separate communication carrier) and decoding frequency or amplitude modulation of the power transfer signal (or a separate communication carrier).

The power transmitter and power receiver may be arranged to perform all suitable operations to establish, perform, support, and terminate power transfer operations allowing power to be transferred. The power transmitter and power receiver may specifically be arranged to perform power transfer operations to comply with the Qi and Ki Specifications.

The power transmitter may accordingly be arranged to support power transfer to a large variety of different power receivers including for example consumer devices such as mobile phones, shavers, etc.

The power transmitter includes a pliable member which provides a pliable contact surface for receiving the power receiver. The pliable member may specifically be part of the enclosure/housing/box/cabinet of the power transmitter (device). The pliable member is arranged such that when the power receiver is positioned for power transfer, it is in contact with the pliable contact surface, and typically it may be resting or otherwise held in place on the pliable contact surface. In many cases, the pliable member may be such that it has an extension in a horizontal dimension (in nominal use) such that the power receiver will be in contact with the pliable contact surface allowing it to be held in place unless substantial forces act on the power receiver. In particular, the pliable member is in many embodiments arranged to provide a pliable contact surface such that in (nominal) use a power receiver device will remain in place as a result of gravity acting on the power receiver.

The pliable member provides a pliable contact surface that is arranged to adapt to, and typically at least partially conform to, the complementary contact surface of the power receiver. For example, when a power receiver is positioned on the pliable contact surface, the pliable member will adapt/change its shape/outline such that a closer match between the complementary surfaces results. The change in the shape of the pliable contact surface may increase the contact area between the two contact surfaces.

The power transfer coil 103 of the power transmitter is comprised in the pliable member, e.g. by being attached to, or embedded within, the pliable member such that changes in the pliable contact surface will (typically) also result in changes in the shape of the power transfer coil. In many embodiments, the power transfer coil adapts with, and conforms to, the pliable contact surface. The power transfer coil may accordingly not simply be a fixedly planar coil but may be comprised in the pliable member such that it adapts to the pliable contact surface. For example, if the pliable contact surface adapts to be non-planar, the power transfer coil will also adapt to be non-planar, and specifically it may adapt to have the same distortion with respect to a planar shape.

It will be appreciated that in many embodiments, such as typically when the power transfer coil is attached to the pliable contact surface, the power transfer coil may adapt the shape to match the pliable contact surface directly. However, it will be appreciated that in other embodiments, there may be some difference in the adaption of the shape of the power transfer coil relative to the shape of the pliable contact surface. For example, the power transfer coil may be embedded within a pliable member made from an elastic material that results in the deformation at the position of the power transfer coil deviating from the deviation at the pliable contact surface.

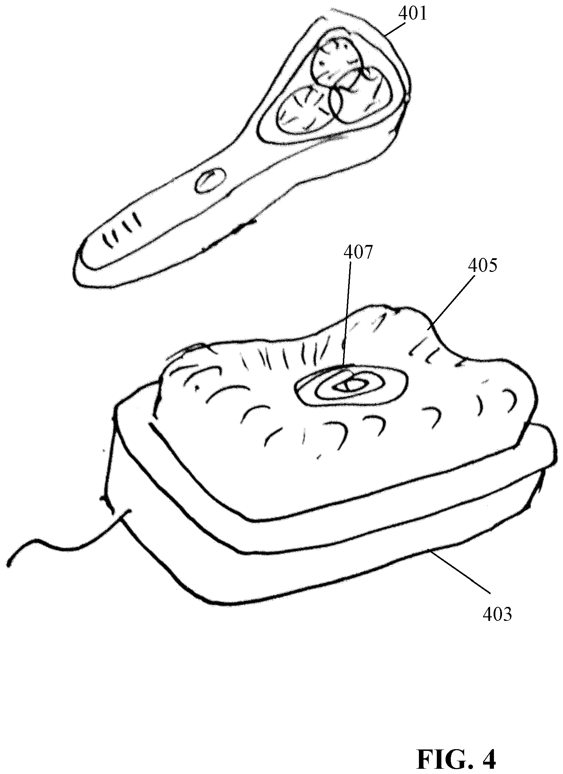

An example of a possible power transfer system is illustrated in FIG. 4. In the example, a power receiver device 401, which in the specific example is a handheld shaver, can be wirelessly powered (e.g. to charge an internal battery) by a power transmitter device 403. In the example, the power receiver device 401 has an irregular, non-planar, rounded shape.

The power transmitter device 403 has a pliable member 405 which includes a power transfer coil 407 attached to it. In the example, when a user positions the power receiver device 401 on the pliable member 405, the pliable member 405 adapts the shape of the contact surface of the pliable member such that the power receiver 404 can sink into and be cradled by the pliable member 405. This may allow the pliable member to provide increased contact and a more stable and reliable fixation of power receiver device 401 for power transfer. Further, it allows the power transfer coil 407 of the power transmitter device 403 to be in closer proximity to the power transfer coil of the power receiver thereby providing a closer coupling and an improved power transfer.

The pliable member may be made from different materials and have different compositions, configurations, geometric properties, and physical properties in different embodiments. In many embodiments, the pliable member may be a member that is susceptible/capable of being modified in form, shape or nature. It may in particular be a member that is compressible and may be a member that can change volume in response to pressure being applied to it. In many embodiments, the pliable member may have a bulk modulus not exceeding 0.1, 0.5. 1, 5, 10, or 20 GPa (GigaPascal). In particular, in many embodiments, the pliable member may be very elastic with a bulk modulus not exceeding 100 kPa.

The pliable member may thus be a deformable, pliant, elastic, (supple), flexible and/or stretchable pliable member capable of changing a shape for at least part of a surface of the pliable member, and specifically for the pliable contact surface arranged to receive the power receiver.

In some cases, the pliable member may be implemented as a homogenous element formed by a single material throughout. The pliable member may comprise only one material which is pliable. However, in other embodiments, the pliable member may be formed by a plurality of materials and may include a plurality of components. For example, the pliable member may be formed by a flexible membrane containing a pliable material.

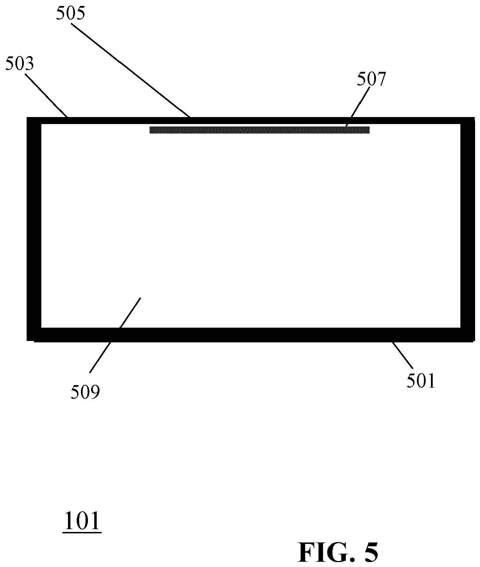

FIG. 5 illustrates an example of a cross section of an arrangement of a power transmitter 101. In the example, the power transmitter may comprise a rigid support structure 501 which specifically may form a closed or open box, cuboid or (regular) prism structure. The rigid structure 501 extends, holds, and/or supports a pliable member 503 which in the specific example is extended by the rigid structure 501 to form a substantially planar element when no other forces than those exerted by the rigid structure are applied to the pliable member 503.

The pliable member 503 may be in the form of a membrane that is extended by the structure 501. The membrane may be made from an elastic material such as for example a rubber type material. The pliable member 503 and the membrane provides a pliable contact surface 505 for receiving a power receiver for power transfer operations.

In the example, the power transfer coil 507 is attached on the pliable member 503, and specifically the power transfer coil 507 may be printed on or glued to the membrane forming the pliable member 503. The power transfer coil 507 may in some embodiments be glued to the side of the membrane, which is opposite the pliable contact surface 505, i.e. opposite the surface of the membrane that receives the power receiver. In other embodiments, it may for example be positioned on the pliable contact surface 505 itself, e.g. it may directly be glued to the membrane that forms the pliable contact surface 505.

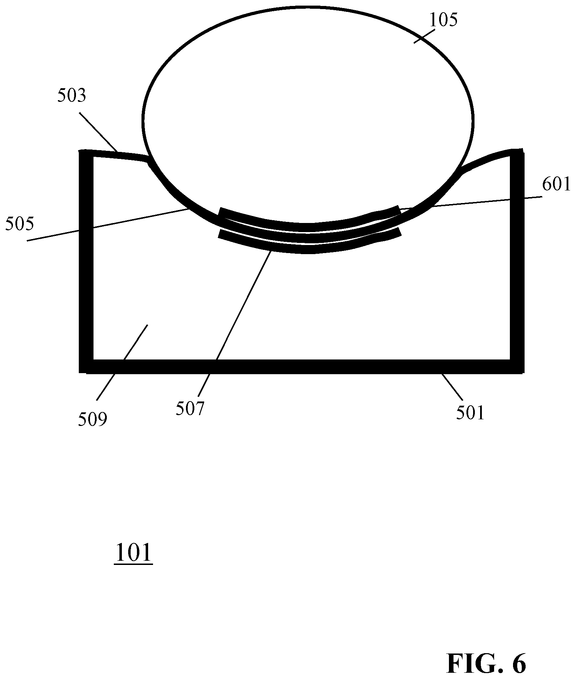

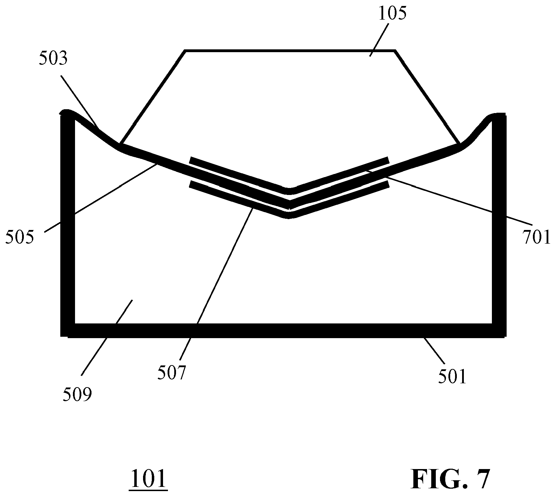

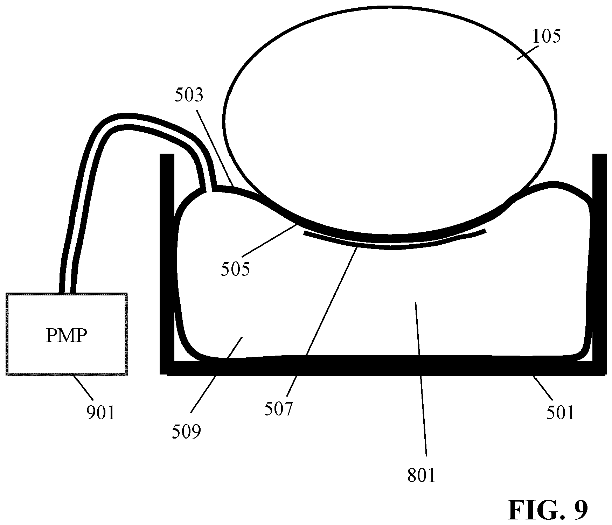

FIGs. 6 and 7 show examples of the same cross section of the same power transmitter as in FIG. 5 but with different power receivers 105 being positioned on the pliable contact surface 505 for a power transfer operation. In the example of FIG. 6 the power receiver device has a substantially oval cross-section whereas the power receiver device of FIG. 9 has a substantially pentagon shaped cross-section. In the example, the membrane/pliable member 503 deforms to provide a pliable contact surface 505 that complements/matches the corresponding contact surface of the power receiver 105. As a result, a substantially improved physical contact is achieved providing a substantially more stable base for the power receiver and making it substantially more likely that the power receiver will be appropriately positioned and that it will remain so. Further, typically, it may allow a substantially improved coupling between power transfer coils of the power transmitter and power receiver. For many power receivers with the power receiving coil (the power transfer coil of the power receiver) being positioned proximal to a non-flat surface, the power receiving coil is often not planar or positioned parallel to a planer contact surface. As illustrated in FIGs. 6 and 7, such a power receiving coil 601, 701 will typically follow the shape of the contact surface (for example it may be attached to the wall of the power receiver providing the contact surface). As can be clearly seen in FIGs. 6 and 7, the power transmitter providing a pliable contact surface that adapts to the shape of the power receiver may provide substantially improved coupling between the coils resulting in substantially improved power transfer performance.

The pliable member may for example, as described, be implemented as an elastic, e.g. rubber or similar, membrane. In other embodiments, the pliable member may be a piece of fabric or cloth that in the specific example is extended by the rigid structure 501. The fabric may be elastic material that is sufficiently flexible to be taut when no power receiver is present but deform to adapt to the shape of a power receiver when such is present. In other embodiments, the fabric may be less flexible (or even not flexible) but fixed loosely to the support structure such that it may adapt to the shape of a power receiver. For example, the piece of fabric may be fixed such that it is loose and forms a hammock shaped receptable for the power receiver thereby allowing it to adapt to the shape of the power receiver.

In cases where the pliable member includes, or is formed by, a piece of fabric or cloth, the power transfer coil may be sown into or on to the piece of fabric. The power transfer coil may be entwined or interweaved between the threads/yarns/fibers forming the piece of fabric. Such an approach may allow ease of manufacturing, and e.g. even allow simple manual manufacturing using simple household items. It may allow a power transfer coil to be implemented which closely follows the shape of the pliable contact surface thereby allowing improved coupling in many embodiments and scenarios.

In some embodiments, the support structure may be an open/non-closed structure that provides support for the pliable member but does not otherwise actively participate in the establishment of a pliable contact surface for the power receiver.

In some embodiments, the pliable member forms at least part of a wall of an enclosed chamber. For example, in the illustrations of FIGs. 5-7, the support structure 501 may be a solid structure which together with the pliable member 503 forms a chamber/cavity 509. In this case, the chamber 509 may comprise and often be filled with a material.

The material may be a compressible material, and specifically may be one that has a bulk modulus not exceeding 0.1, 0.5. 1, 5, 10, or 20 GPa, and most typically having a bulk modulus not exceeding 3 GPa or in some cases not exceeding 100 kPa.

In many embodiments, the enclosed chamber comprises, and is often filled with, a non-solid material. Such a material may be a gas and/or liquid material or a composite material including elements of solid material together with gas and/or liquid material. The compressible material may specifically be an elastic material.

In such embodiments, the pliable member 503 may be a relatively soft element/material that mainly provides the pliable contact surface and contains the compressible material within the chamber but with the main pliable/elasticity/flexible/adaptable properties of the pliable contact surface being determined by the corresponding properties of the compressible material.

FIGs. 5-7 illustrate an example of a cross section of an arrangement of a power transmitter 101 comprising a rigid support structure 501 which specifically may form a chamber in the form of a closed box, cuboid or (regular) prism structure apart from one side, i.e. with one side missing which is covered by the pliable member 503. Thus, the pliable member 503 forms/generates/creates a chamber/cavity 509 by closing the structure formed by the support structure 501. The pliable member accordingly combines with the rigid structure 501 to form an enclosed chamber/cavity.

The chamber is filled with a material, such as e.g. a gas, liquid or mixed composition material. The material may be a compressible material designed/selected to have properties that are suitable for providing the desired amount of flexibility and elasticity to the pliable contact surface via the pliable member 503. Such an approach allows for an advantageous implementation and manufacturing in many embodiments and may in particular facilitate construction and production of a power transmitter that has a pliable contact surface with suitable physical/mechanical properties, and specifically with an appropriate flexibility/shapeability/pliability/elasticity.

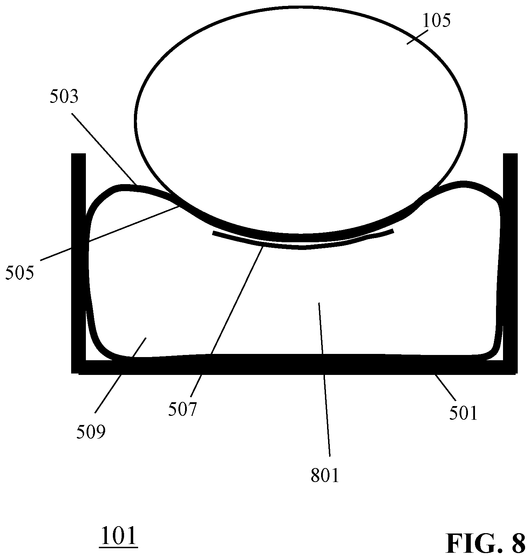

In some embodiments, the pliable member may substantially form the enclosed chamber by itself. For example, the pliable member may be a flexible membrane that can hold a material such as a liquid or gas. The pliable member may be a flexible membrane which forms a container that can hold a material. The pliable member may for example form a balloon, sack, and/or bag type container which can contain a material. An example of such an approach is illustrated in FIG. 8 which corresponds to the examples of FIGs. 5-7 but with the pliable member by itself forming a container/chamber 509 for the material 801.

In the illustrated examples, the pliable member may accordingly be arranged to provide a pillow or cushion effect that allows the power receiver to rest on the pliable contact surface and with this and the power transfer coil adapting to the shape of the power receiver.

As described, in many embodiments, the power transmitter may comprise a non-solid and/or compressible material enclosed in a cavity/chamber (at least partly) formed by the pliable member. The pliable member may be a pliable/flexible membrane. The cavity/chamber may (at least partly) be formed by the opposite surface of a membrane than the one forming the pliable contact surface. The pliable member may be formed by a flexible membrane enclosing/ constraining the non-solid/compressible material. In some embodiments, the pliable member may be a hollow member forming a chamber comprising the non-solid/compressible material and having at least a pliable section forming the pliable contact surface.

In many embodiments, the non-solid/compressible material may advantageously be a gel. A gel may be a mixed (semi-solid) material that may be particularly advantageous in many embodiments. It may typically allow a cheap material to be used that allow ease of manufacturing while allowing a desired degree of pliability and flexibility to be provided by the pliable contact surface.

In some embodiments, the non-solid/compressible material may advantageously be a foam, and specifically may be a memory foam. A foam may comprise a large number of air bubbles and may in many scenarios provide an advantageous degree of flexibility and elasticity to the pliable contact surface. It may in many scenarios allow cheap and/or practical manufacturing.

In some embodiments, the non-solid material may be fluid.

In particular, the non-solid/compressible material may be a gas such as atmospheric air, oxygen, nitrogen, helium, etc. A gas may be particularly advantageous in many embodiments by allowing a practical and typical cheap manufacturing of the power transmitter. It may typically provide a practical way of providing a pliable contact surface with suitable properties and allows for this to be more easily controlled and adapted. For example, the desired properties may be achieved by suitably filling the chamber/container to achieve a desired pressure (after which the chamber may e.g. be sealed).

In some embodiments, the non-solid material may advantageously be a liquid, such as e.g. water. The use of a liquid may in many scenarios be highly advantageous and allow easy low cost manufacturing and implementation. It may further facilitate the efficient and reliable provision of the desired properties, and in particular the desired pliability of the pliable contact surface. For example, the elasticity/rigidity of the pliable contact surface may be adapted by the choice of how much liquid is included in the chamber. For example, if the pliable member forms a flexible container (e.g. a ballon type element), the pliability may be controlled by the selection of how much liquid is included in the container.

The above compressible/non-solid materials may each provide highly advantageous implementations with improved trade-offs that may be particularly advantageous depending on the specific requirements or preferences of the individual embodiment or implementation.

The approach may provide a power transmitter that has a pliable surface with a pliable coil that adapts to the shape of devices placed on it. The pliable contact surface may be a fabric with a printed or embroidered coil. The fabric may e.g. be supported by a soft 'pillow' so that a power receiver device sinks in a bit and the fabric coil plies around it. In some embodiments, there may e.g. be an air-filled pillow that the power receiver can rest upon. To enable wrapping around a power receiver device placed on the pliable contact surface, the surface could be formed by a form of cushion/pillow, for example filled with gel or foam. Alternatively, it could be an air-filled balloon. The approach may not only provide an improved physical positioning and holding of the power receiver device but may also allow substantially improved power transfer.

In many embodiments, the power transmitter may be designed to have fixed properties, and specifically the chamber may have a fixed dimension/volume and the amount and pressure of the material in the chamber may be constant.

However, in other embodiments, the power transmitter may be arranged to adapt a property of the chamber and/or material to allow the pliability of the pliable contact surface to be dynamically adapted.

Specifically, the power transmitter may comprise functionality for varying the pressure in the chamber to increase or decrease the pliability/elasticity of the pliable contact surface. The power transmitter may be arranged to increase the pressure exerted by the material on the walls of the chamber in order to reduce the pliability and elasticity of the pliable contact surface and/or may be arranged to reduce the pressure exerted by the material on the walls of the chamber in order to increase the pliability and elasticity of the pliable contact surface.

Different approaches may be used to increase and /or increase the pressure in the chamber in different embodiments. In many embodiments, the power transmitter may be arranged to vary the density of the material in the chamber and specifically may be arranged to increase or decrease the amount of material in the chamber and/or may be arranged to change the volume of chamber.

For example, as illustrated in FIG. 9, the arrangement of FIG. 8 may be supplemented by a pump function 901 which may be arranged to pump more material 801 into the chamber 509. The pump function 901 may further be bidirectional or comprise a controllable valve that allows material to exit/be extracted from the chamber 509. The pump function may for example in some embodiments be a bidirectional pump function which can pump material in both directions. Thus, by selectively running the pump when a change is required, and in a direction depending on whether it is desired to increase or decrease pressure, the power transmitter can control the degree of pliability of the pliable member and the pliable contact surface.

The pump function may for example be a liquid/-water pump or a gas/air pump depending in the material being used.

Alternatively or additionally, the power transmitter may be arranged to change the volume of the chamber thereby changing the density of the material in the chamber and the pressure being exerted on the walls thereof.

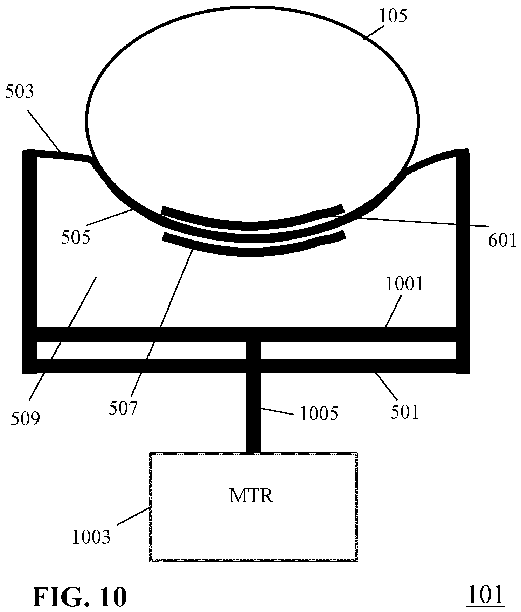

FIG 10 illustrates an example of such an approach where the support structure 501 further supports a movable member 1001 which may be arranged to move under the control of a motor function 1003. The movable member 1001 may for example form a movable bottom of the chamber and may form a tight, sealed connection with the walls of the support structure 501. In other embodiments, such as for example where the pliable member forms a flexible container, such as in the example of FIG. 8, the moveable member 1001 may be substantially smaller than the floor of the support structure but may still substantially change the volume of the flexible container thereby changing the pressure of the chamber formed thereby.

The motor may for example be coupled to a spindle 1005 which is further coupled to the moveable member 1001. The arrangement may be such that a rotational movement impacted to the spindle results in a lateral movement of the spindle and thus the movable member 1001 allowing this to be moved up and down thereby decreasing and increasing the volume of the chamber 509 and accordingly increasing and decreasing the pressure on the pliable member 503 resulting in a change of pliability of the pliable contact surface.

The algorithm and criteria for how and when to adapt the pressure and degree of pliancy of the pliable contact surface will depend on the preferences and requirements of the individual embodiment.

In some embodiments, the power transmitter may be arranged to adapt the pressure within the chamber in response to a user input. For example, the power transmitter device may include a user input that allows the user to set a parameter in response to which the power transmitter may adapt the pressure. In some embodiments, a user may e.g. be able to select between different settings such as high, medium, and low pliability/elasticity and the power transmitter may be arranged to set the pressure accordingly, such as specifically to a predetermined value for each setting. In some cases, the different options may be indicated to the user with reference to the power receiver device. For example, the user may be capable of selecting between different power receiver device types, such as types with various properties from large, heavy irregular devices to small, light, flat devices.

In some embodiments, the power transmitter may be arranged to set the pressure dependent on a measured parameter, such as specifically a measured parameter relating to the power receiver device. For example, the power transmitter may include means for determining a measurement of the power receiver and set the pressure accordingly. For example, the measurement may be of a weight of the power receiver and the adaptation may be such that the heavier the power receiver device is measured to be, the higher the pressure is set.

As another example, the pliable contact surface may comprise a (potentially large) number of touch sensors and the pressure may be dynamically varied until the maximum number of touch sensors indicate that they are in contact with another object (the power receiver).

In some embodiments, the power transmitter may be arranged to adapt/vary/set the pressure of the chamber in dependence on a wireless power transfer efficiency for the power transfer from the power transmitter to the power receiver. The efficiency may for example be determined by the power transmitter calculating the amount of power being fed to the power transfer coil and comparing it to a power received estimate received from the power receiver, where the power received estimate is indicative of the power extracted by the power receiver from the receiver power transfer coil.

In some embodiments, the power transmitter may be arranged to adapt/vary/set the pressure of the chamber in dependence on a coupling factor between the power transfer coil of the power transmitter and the power receiving coil of the power receiver.

Different approaches may be used to determine a coupling factor, K, in different embodiments. In some embodiments, the power transmitter may proceed to measure/ estimate the coupling factor by determining one or more resonance frequencies for the power transmitter resonance circuit when loaded by the power receiver. The power receiver may be entered into a high-Q mode during such a measurement and the resonance frequency may be determined by the power transmitter by a frequency sweep of the signal driving the transmitter power transfer coil 103. Based on the resonance frequency, the coupling factor can be calculated based on the free running resonance frequencies of the power receiver resonance circuit and the power transmitter resonance circuit.

In some embodiments, the coupling factor may be determined based on a ratio between the voltage $u_2$ over the receiver power transfer coil 107 when unloaded and the voltage $u_1$ over the transmitter power transfer coil 103, and on the ratio between the self inductances of respectively the transmitter power transfer coil 103 ($L_1$) and the receiver power transfer coil 107 ($L_2$):

$$K = \frac{u_2}{u_1} \sqrt{\frac{L_1}{L_2}}$$

Measurements may be made by the power receiver 105 and communicated to the power transmitter 101.

In some embodiments, measurements of the inductance of the transmitter power transfer coil 103 may be made for a situation where the receiver power transfer coil 107 is open ($L_1$) and when it is short-circuited ($L_1'$). The coupling factor may then be determined from:

$$K = \sqrt{1 - \frac{L'_1}{L_1}}$$

In some embodiments, measurements of the effective resonance frequency of the output circuit may be made for a situation where the receiver power transfer coil 107 is open ($f_{res}$) and when it is short-circuited ($f_{res}'$). This may for example be implemented by the power receiver including a switch function at the receiver power transfer coil 107. The coupling factor may then be determined from:

$$K = \sqrt{1 - \frac{f_{res}^2}{f'_{res}^2}}$$

It will be appreciated that other approaches for measuring or estimating a coupling factor between coils, and in particular wireless power transfer coils, will be known to the skilled person and that any suitable approach may be used without detracting from the invention.

The power transmitter may be arranged to set the pressure depending on the measured/estimated coupling factor. In some embodiments, a relatively simple approach may be used, such as simply changing the pressure (randomly or by a predetermined value) if the coupling factor is less than a given threshold and not changing the pressure of the coupling factor exceeds the threshold.

In other embodiments, more complex approaches may be used. For example, the power transmitter may be arranged to vary the pressure over the available range while continuously in real time measure the coupling factor. It may then proceed to set the pressure for the power transfer operation to correspond to the pressure level for which the maximum coupling factor was determined.

Setting the pressure based on the coupling factor may be particularly advantageous in many embodiments as it allows the system to adapt and provide an improved, and in many cases optimized, coupling for the power transfer signal for a range of potentially very different power receivers. This may provide a substantially more efficient and reliable power transfer operation in many cases.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. A wireless power transmitter (101) for wirelessly providing power to a power receiver (105) via an electromagnetic power transfer signal, the power transmitter comprising:

   a power transfer coil (103) arranged to generate the electromagnetic power transfer signal in response to a drive signal being provided to the power transfer coil (103);
   a power circuit (201) arranged to generate the drive signal for the power transfer coil (103) to generate the power transfer signal;
   a pliable member (405, 503) comprising the power transfer coil (103) and being adapted to provide a pliable contact surface (505) for receiving the power receiver (105), the pliable contact surface (405) being arranged to adapt a shape to a contact surface of the power receiver (105).

2. The wireless power transmitter of any previous claim wherein the power transfer coil (103) is attached to a surface of the pliable member (405, 503).

3. The wireless power transmitter of any previous claim wherein the pliable member (405, 503) comprises a piece of fabric forming the pliable contact surface (505).

4. The wireless power transmitter of claim 3 wherein the power transfer coil 103 is sown into the piece of fabric.

5. The wireless power transmitter of any previous claim wherein the pliable member (405, 503) forms at least part of a wall of an enclosed chamber (509) comprising a material (801).

6. The wireless power transmitter of claim 5 wherein the material (801) is a non-solid material (801).

7. The wireless power transmitter of claim 5 or 6 wherein the material is a compressible material (801).

8. The wireless power transmitter of claim 5 wherein the material comprises at least one of:

   a gel;
   a foam;
   a liquid; and
   a gas.

9. The wireless power transmitter of any of claims 5-8 further arranged to adapt a pressure of the material (801) in the enclosed chamber (509).

10. The wireless power transmitter of any of claims 5-9 further arranged to adapt a density of the material (801) in the enclosed chamber (509).

11. The wireless power transmitter of claim 9 arranged to adapt the pressure dependent on a coupling factor between the power transfer coil (103) and a power receiving coil (107) of the power receiver (105).

12. The wireless power transmitter of claim 10 or 11 being arranged to vary an amount of the material (801) in the enclosed chamber (509).

13. The wireless power transmitter of any of claims 10 to 12 arranged to vary a degree of compression of the material (801) in the enclosed chamber (509).

14. The wireless power transmitter of any of claims 10 to 13 wherein the controller is arranged to vary a size of the enclosed chamber (509).

15. A method of operation for a wireless power transmitter wirelessly providing power to a power receiver (105) via an electromagnetic power transfer signal, the power transmitter comprising:

   a power transfer coil (103) arranged to generate the electromagnetic power transfer signal in response to a drive signal being provided to the power transfer coil (103);
a pliable member (405, 503) comprising the power transfer coil (103) and being adapted to provide a pliable contact surface (505) for receiving the power receiver (105), the pliable contact surface (405) adapting a shape to a contact surface of the power receiver (105) and the method comprising:

generating the drive signal for the power transfer coil (103) to generate the power transfer signal; and
adapting a pressure of the material on the pliable member (405, 503).

101

105

103

PTX

PRX

107

**FIG. 1**

201

PTX
CTRL

103

203

COMM

**FIG. 2**

101

107

301

RXC

303

COM

305

105

**FIG. 3**

**FIG. 4**

101

**FIG. 5**

105

503

601

505

509

507

501

101

**FIG. 6**

101

FIG. 7

105

503

505

509

507

801

501

101

**FIG. 8**

FIG. 9

**FIG. 10**                                    101

Europäisches
Patentamt

European
Patent Office

Office européen
des brevets

# EUROPEAN SEARCH REPORT

**Application Number**

EP 24 17 2779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/202467 A1 (ZITNIK RALPH J [US] ET AL) 20 July 2017 (2017-07-20) | 1-11,13, 15 | INV. H02J50/10 |
| A | * abstract * * paragraphs [0258] - [0279]; figures 48-52C * | 12,14 | |
| | ----- | | |
| X | WO 2022/073037 A1 (OBSTETRIC SOLUTIONS LLC [US]) 7 April 2022 (2022-04-07) * abstract * * paragraph [0126]; figure 31 * | 1-11,13, 15 | |
| | ----- | | |

**TECHNICAL FIELDS SEARCHED (IPC)**

H02J

The present search report has been drawn up for all claims

| Place of search | Date of completion of the search | Examiner |
|---|---|---|
| Munich | 2 October 2024 | Jäschke, Holger |

EPO FORM 1503 03.82 (P04C01)

## ANNEX TO THE EUROPEAN SEARCH REPORT
## ON EUROPEAN PATENT APPLICATION NO.

EP 24 17 2779

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2024

| Patent document cited in search report | Publication date | Patent family member(s) | Publication date |
|---|---|---|---|
| US 2017202467 A1 | 20-07-2017 | EP 3405255 A1 | 28-11-2018 |
| | | US 2017202467 A1 | 20-07-2017 |
| | | WO 2017127758 A1 | 27-07-2017 |
| WO 2022073037 A1 | 07-04-2022 | NONE | |

EPO FORM P0459

For more details about this annex : see Official Journal of the European Patent Office, No. 12/82